# EUROPÄISCHE PATENTANMELDUNG

(11) **EP 0 667 096 A1**
(43) Veröffentlichungstag der Anmeldung: **16.08.1995**
(21) Anmeldenummer: 95100472.0
(22) Anmeldetag: 14.01.1995
(51) Int. Cl.: A01F 15/04, A01F 15/08

(54) **Selbstfahrende Grossballenpresse**

(30) Priorität: 10.02.1994 DE 4404228
(71) Anmelder: FORTSCHRITT ERNTEMASCHINEN GmbH, D-01844 Neustadt (DE)
(72) Erfinder: Oliva, Klaus, D-01844 Langburkersdorf (DE); Reissig, Peter, D-01844 Neustadt (DE); Oliva, Christoph, D-01844 Langburkersdorf (DE)
(74) Vertreter: Müller, Lutz

(57) **Zusammenfassung**

Die Erfindung betrifft eine selbstfahrende Großballenpresse zur Herstellung von quaderförmigen Ballen aus landwirtschaftlichen Erntegütern.

Der Aufbau einer derartigen Großballenpresse ist, daß sich über den Vorderrädern (1) eine Fahrerkabine (3) befindet und an deren Rückwand (4) schließt sich ein annähernd horizontal gerichteter Preßkanal (5) an. Vom Boden des Preßkanals (5) hängt ein nach vorn gekrümmter Zuführkanal (9) herab. Ein Verbindungsrahmen (13) verbindet das vordere Ende des Preßkanals (5) mit dem Fahrgestell im Bereich der Vorderräder (1) so, daß er sich außerhalb der Blickrichtung des Fahrers befindet, wenn dieser durch das hintere durchsichtige Rückwandteil (4) der Fahrerkabine (3) auf die unmittelbar hinter den Vorderrädern (1) angeordnete Pick up (11) schaut. Die Pick up (11) ist mit dem vorderen Ende des Zuführkanals (9) verbunden. Der Verbindungsrahmen (13) ist entweder als ein einzelner schmaler Profilträger (14) im Bereich hinter dem Fahrersitz (22) ausgebildet oder ein linker und ein rechter Profilträger (28;29) gehen im Bereich der Seitenwände (32;33) der Fahrerkabine (3) zum Fahrgestell.

## Beschreibung

Die Erfindung betrifft eine selbstfahrende Großballenpresse nach dem Oberbegriff des Anspruches 1, die vorzugsweise zur Ernte landwirtschaftlicher Erntegüter, wie Heu, Stroh oder Welkgut, einsetzbar ist und die genannte Erntegüter zu quaderförmigen Ballen verpreßt.

Eine derartige selbstfahrende Großballenpresse ist bisher nur in einer Ausführung bekannt geworden. Es handelt sich dabei um ein Erzeugnis der deutschen Firma DEUTZ-FAHR, das die Typbezeichnung "POWER PRESS 120" trägt und im Prospekt genannter Firma mit dem Druckvermerk LL-ED 08/93 der Öffentlichkeit vorgestellt wurde. Diese selbstfahrende Großballenpresse besteht aus einem Fahrgestell mit hinterer Lenkachse und vorderen Triebrädern, über denen die Fahrerkabine angeordnet ist. Vor den Triebrädern befindet sich eine sehr breite Aufnahmevorrichtung, die eine Pick up und eine dahinter und darüber angeordnete Querförderschnecke aufweist, so daß gleichzeitig zwei Mähdrescherschwade aufgenommen, in der Breite zusammengeführt und an den nachgeordneten Förderschacht übergeben werden können. Die Aufnahmevorrichtung ist am vorderen Ende des Förderschachtes befestigt, der sich nach hinten zwischen den Triebrädern hindurch bis an die Einlaßöffnung des Zuführkanals der Preßeinrichtung erstreckt. An dieser hintersten Stelle sind der Förderschacht und der Zuführkanal um eine horizontale Achse verschwenkbar miteinander verbunden, so daß das Erntegut vom Förderschacht in den Zuführkanal gelangen kann.

Ein über der oberen Wandung des Zuführkanals angeordneter Rotorförderer, der mit seinen Zinken in den Zuführkanal eingreifen kann, befüllt diesen und befördert in Abstimmung mit der Bewegung des Preßkolbens das Erntegut in den Preßkanal.

Nachteilig an dieser Lösung ist, daß sich durch den konzeptionellen Aufbau einer derartigen selbstfahrenden Großballenpresse, nämlich daß die Preßeinrichtung erst hinter der Fahrerkabine beginnen kann, für den Förderschacht sehr lange Transportwege ergeben. Da der Förderschacht mit einer unterschlächtig wirkenden Einzugskette ausgestattet ist, wird das Erntegut gegen die Wandreibung bis zum Zuführkanal des Pressenteils transportiert, wodurch ein Teil der zur Verfügung stehenden Antriebsleistung verbraucht wird.

Außerdem wirkt der Förderschacht aufgrund seiner maximal möglichen Abmessungen durchsatzleistungsbegrenzend, da dessen Querschnitt für die Masse von zwei Schwaden aus Platzgründen nicht ausreichen kann. Damit ein Verstopfen vermieden wird, verbleibt dem Fahrer als einzige Reaktion das Verringern der Fahrgeschwindigkeit.

Um dieser Verstopfungsneigung von vornherein entgegenzuwirken, läuft die Einzugskette mit einer höheren Geschwindigkeit als bei einem Mähdrescherschacht. Die Folgen daraus sind ein höherer Verschleiß und große Aufwendungen für Wartung und Instandsetzung.

Ein weiterer Nachteil ist die hohe Wickelneigung an den Wellen für die Umlenkräder der Einzugskette, was einmal auf deren vorstehend diskutierte höhere Drehzahl und zum anderen auf die Verschiedenartigkeit und die Konsistenz der mit einer Großballenpresse zu bergenden Erntegüter zurückzuführen ist. Hier gibt es im Vergleich zum Mähdrescher erhebliche Unterschiede, da das zu verpressende Stroh schon einmal intensiv durch den Dreschvorgang bearbeitet wurde und die übrigen Erntegüter Gras bzw. Welkgut viel eher als Stroh zum Wickeln neigen.

Der wesentlichste Nachteil ist aber das Erntegut- übergabeproblem zwischen der Aufnahmevorrichtung und dem Förderschacht einerseits bzw. dem Förderschacht und dem Zuführkanal andererseits.

Dieses Problem haftet allen Fördereinrichtungen an, wo die aktiven Förderorgane nicht ineinandergreifen können Das ist vorn so zwischen dem Mittelstück der Querförderschnecke, der darunter angeordneten Förderwalze und der Einzugskette und hinten zwischen der Einzugskette und dem Rotorförderer.

In einer anderen Ausführungsart der "POWER PRESS 120" wurde sogar aufgrund anderer Vorteile der Förderschacht geteilt ausgeführt, wodurch noch eine weitere mit den gleichen Nachteilen behaftete Übergabestelle hinzukommt.

An derartigen Übergabestellen sind bei Feldhäckslern, Mähdreschern und Schwadmähern selbst bei normalem Schwadmassenangebot Probleme bei der Weiterleitung des Erntegutes bekannt geworden. Bei noch größeren Schwadmassen, die aber für eine selbstfahrende Großballenpresse notwendig sind, wirken sich diese Nachteile noch drastischer aus.

Schließlich ergibt sich aus den Übergabeproblemen noch der Nachteil, daß das obere Trum der Einzugskette dann Erntegut wieder zum vorderen Ende des Förderschachtes bringt.

Abschließend sind noch als Nachteile einer derartigen Konzeption der hohe Material- und Herstellungsaufwand zu nennen sowie die beträchtliche Gesamthöhe der selbstfahrenden Großballenpresse, da der Motor zur Verkürzung der Antriebswege direkt über dem Hauptgetriebe des Pressenteils angeordnet ist.

Der vorliegenden Erfindung liegt daher die Aufgabe zugrunde, eine selbstfahrende Großballenpresse zu schaffen, die einen geringen Material-und Herstellungsaufwand erfordert, wo nach der Aufnahme des Erntegutes vom Feld nur noch kurze Transportwege bis zum Preßkanl der Preßeinrichtung notwendig sind, wo sich auf diesem Transportweg keine Fördereinrichtungen mit durchsatzleistungsbegrenzendenAbmessungen befinden und wo möglichst wenig Übergabestellen zwischen den Fördereinrichtungen vorhanden sind.

Diese Aufgabe wird durch den kennzeichnenden Teil des Anspruches 1 gelöst, wobei in den Unteransprüchen Merkmale aufgeführt sind, die die Lösung in vorteilhafter Weise weiterentwickeln. Bei einer derartigen Konzeption der selbstfahrenden Großballenpresse wird das entweder gleich als Doppelschwad abgelegte Erntegut oder das vorher zu einem Schwad großer Masse zusammengelegte Erntegut von der Maschine so angefahren, daß sich dieses zwischen den Vorderrädern befindet und erst dann von der hinter den Vorderrädern angeordneten Pick up vom Boden aufgenommen wird. Der dann folgende Zuführ- und Preßvorgang gleicht dem einer gezogenen Großballenpresse völlig. Durch die Gestaltung des Verbindungsrahmens als einzelner Profilträger direkt hinter dem Fahrersitz oder als je ein Profilträger im Bereich der Seitenwände der Fahrerkabine sowie der durchsichtigen Gestaltung des hinteren unteren Rückwandteils der Fahrerkabine hat der Fahrer jederzeit die Möglichkeit, den Erntegutfluß von der Pick up und die Weiterförderung in den Zuführkanal ständig zu kontrollieren. Das ist für einen ungestörten Arbeitsablauf wichtig, denn nur durch diesen Blickkontakt sind dementsprechende Reaktionen des Fahrers durch Lenkbewegungen bzw. verändern der Fahrgeschwindigkeit möglich.

Damit dieser Blickkontakt auch bei der Ausführung mit nur einem Profilträger hinter dem Fahrersitz gewährleistet ist, sollte dieser Profilträger nicht breiter als die Rückenlehne bzw. der Fahrersitz sein. Diese Ausführung bietet sich in Verbindung mit einer gelenkten Pendelachse an, ist aber ebenso in Verbindung mit einer starren Achse geeignet. Für die Lenkung der Vorderachse ist auch der Einsatz einer Drehschemellenkung möglich, wobei beide beschriebenen Ausführungen des Verbindungsrahmens zum Einsatz kommen können. Hier sind als Vorderräder zwei eng nebeneinanderstehende Breitreifen zweckmäßig, die den Erntegutschwad überfahren und somit bereits eine erste Vorverdichtung bewirken, was zum Beispiel bei dem sehr locker auf dem Feld liegenden trockenen Stroh erwünscht ist.

Schließlich ist noch die Variante einer selbstfahrenden Großballenpresse mit starrer, angetriebener Vorderachse und hinterer Lenkachse zu erwähnen, so der Verbindungsrahmen durch die beiden sich im Bereich der Seitenwände der Kabine befindenden Profilträger gebildet wird und die dann in der Nähe der Vorderräder auf deren Achse enden. Neben den hier beschriebenen Möglichkeiten der direkten Ernte aus dem Schwad soll noch auf die Kombinationsmöglichkeit der selbstfahrenden Großballenpresse mit einem Rotorschwaderpaar hingewiesen werden, wodurch der Arbeitsgang Schwaden aus der Breitablage oder Zusammenschwaden kleinerer Schwade in einem Arbeitsgang mit dem Preßvorgang zu erledigen ist.

Die Vorteile einer solchen selbstfahrenden Großballenpresse sind, daß durch die kurzen Transportwege des Erntegutes nach der Aufnahme in der Maschine die Antriebsleistung geringer als bisher sein kann, daß es keine durchsatzbegrenzenden Elemente, wie den im Stand der Technik beschriebenen Förderkanal mehr gibt und dessen Aufwand zur Herstellung und Wartung entfällt. Letztlich ist für die einwandfreie Funktion von wesentlicher Bedeutung, daß keine störenden Übergabestellen zwischen verschiedenen Förderorganen mehr vorhanden sind, so daß praktisch die maximale Durchsatzleistung des Pressenteils ausgenutzt werden kann.

Schließlich ist noch als Vorteil die geringe Gesamthöhe der selbstfahrenden Großballenpresse zu nennen, die sich aus der Anordnung des Motors im hinteren Bereich des Preßkanals ergibt. Die Erfindung soll nachstehend in drei Ausführungsbeispielen näher erläutert werden, wobei die einzelnen Figuren zeigen:
Fig. 1: eine Seitenansicht der selbstfahrenden Großballenpresse bei der Aufnahme eines Schwades und in der Ausrüstungsvariante mit vorderer Pendelachse und gelenkten Vorderrädern
Fig. 2: eine Vorderansicht nach Fig. 1, wobei eine Seite ohne Fahrerkabine dargestellt ist
Fig. 3: eine teilweise Seitenansicht einer selbstfahrenden Großballenpresse mit Drehschemellenkung und 2 Breitreifen
Fig. 4: eine Vorderansicht nach Fig. 3, wobei eine Seite ohne Fahrerkabine dargestellt ist
Fig. 5: eine Seitenansicht wie Fig. 1 und zusätzlich angehangenen Rotorschwadern
Fig. 6: eine Draufsicht nach Fig. 5, wobei eine Seite ohne die Verbindungselemente zwischen Großballenpresse und Rotorschwader darstellt ist
Fig. 7: eine Seitenansicht einer selbstfahrenden Großballenpresse mit Hinterradlenkung und Vorderradantrieb.

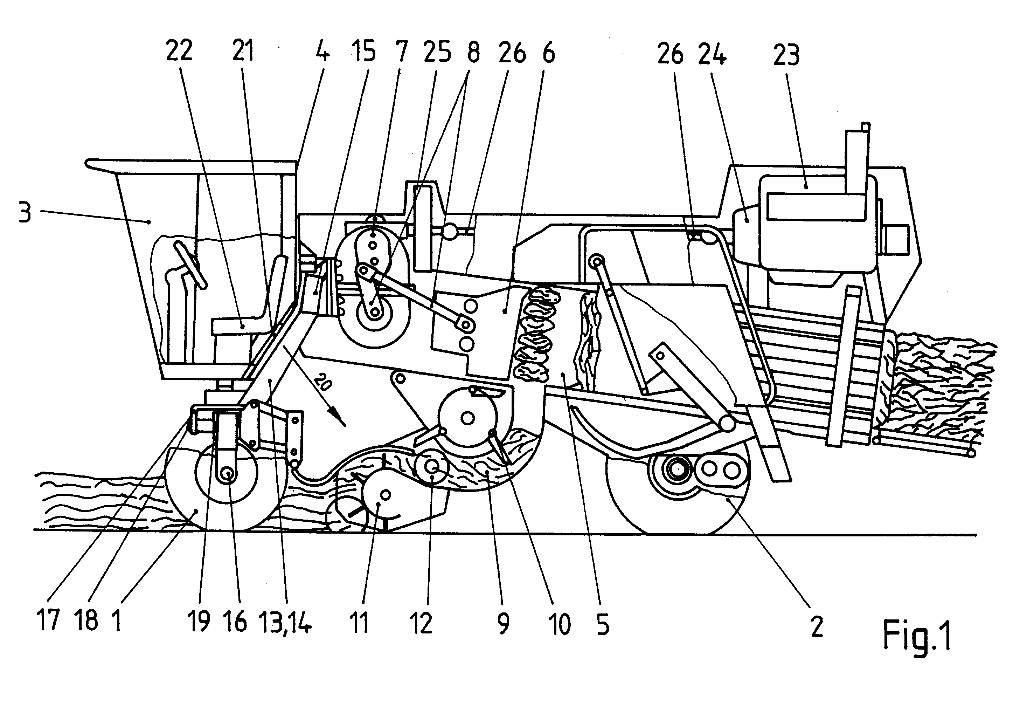

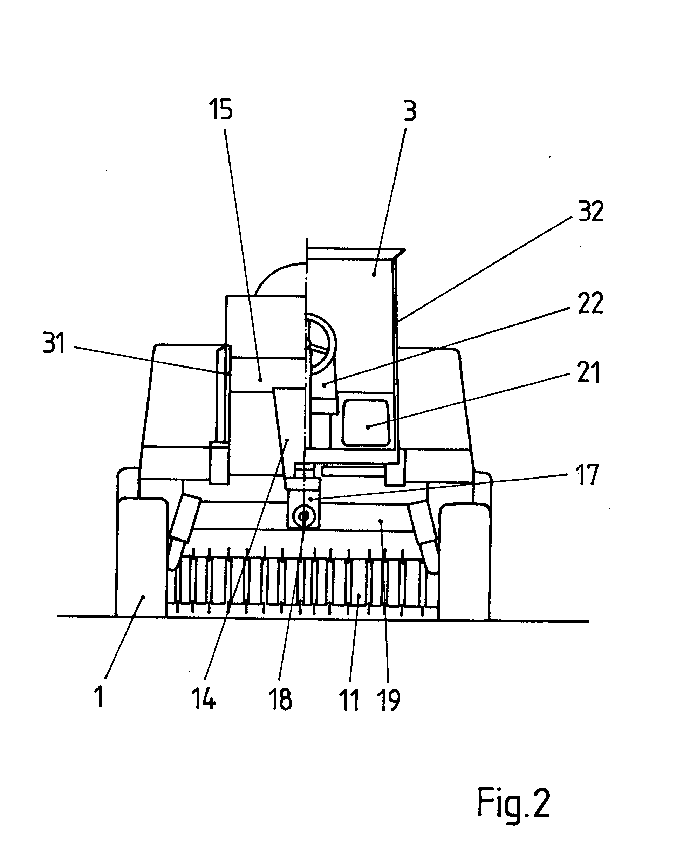

Im ersten Ausführungsbeispiel nach Fig. 1 und 2 ist eine selbstfahrende Großballenpresse dargestellt, deren Fahrgestell aus gelenkten Vorderrädern 1 und angetriebenen Hinterrädern 2 besteht, wobei deren Radabstand so gewählt ist, daß die Außenkanten der Vorderräder 1 und der Hinterräder 2 mit den Seitenverkleidungen der Großballenpresse annähernd vergleichen. Damit ist es möglich, einen Schwad großer Masse mit den Vorderrädern 1 ohne Kontakt zu überfahren.

Über den Vorderrädern 1 befindet sich die Fahrerkabine 2 und unmittelbar hinter ihrem Rückwandteil 4 beginnt der sich annähernd in horizontaler Richtung nach hinten erstreckende Preßkanal 5. Im Preßkanal 5 bewegt sich ein Preßkolben 6 hin und her, wobei dieser von einem im vorderen Ende des Preßkanals 5 angeordneten Hauptgetriebe 7 und einem sich daran anschließenden Kurbeltrieb 8 aus angetrieben wird.

Unterhalb des Preßkanals 5 ist ein nach unten zeigender und nach vorn gekrümmter Zuführkanal 9 angebracht, in dessen Krümmungsradius sich ein Förderorgan 10 befindet, welches in diesem Ausführungsbeispiel als Rotorförderer ausgebildet ist und der zur vollständigen Befüllung und anschließenden Entleerung des Zuführkanals 9 in den Preßkanal 5 dient.

Unmittelbar hinter den Vorderrädern 1 befindet sich eine bodengeführte Pick up 11, die annähernd die Breite des Radabstandes der Vorderräder 1 bzw. der Hinterräder 2 besitzt und die, wie von gezogenen Großballenpressen her bekannt, mit dem Eingang des Zuführkanals 9 verbunden ist. Kurze Querförderschnecken 12, die von den äußeren Enden der Pick up 11 bis zu den Seitenwänden des Zuführkanals 9 reichen, führen das vom Boden aufgenommene Erntegut auf die Breite des Zuführkanals 9 zusammen.

Die Verbindung zwischen dem Preßkanal 5 und den Vorderrädern 1 ist hier mit einem Verbindungsrahmen 13 hergestellt, der als einzelner Profilträger 14 ausgebildet ist, der mittig vom vorderen oberen Querträger 15 des Preßkanals 5 ausgeht und der mit einem sich mittig zwischen und über der Achse 16 der Vorderräder 1 befindenden Brückenteil 17 biegesteif verbunden ist.

Dieses Brückenteil 17 ist gleichzeitig Lagerstelle für einen horizontal in Fahrtrichtung zeigenden Pendelbolzen 18, der Teil des Vorderachsträgers 19 für die gelenkten Vorderräder 1 ist und wodurch die Bauart einer vorderen Pendelachse gegeben ist.

Im hinteren Rückwandteil 4 der Fahrerkabine 3 sind in der Blickrichtung des Fahrers auf die Pick up 11 nach Pfeil 20 durchsichtige Scheiben 21 eingebracht, so daß er sich im Bedarfsfall immer über die Aufnahme des Erntegutes informieren kann.

Dadurch, daß der einzelne Profilträger 14 direkt hinter dem Fahrersitz 22 vorbeiführt und höchstens dessen Breite im Sitz- bzw. Lehnenbereich aufweist, kann der Fahrer beidseitig, an dem einzelnen Profilträger 14 vorbeischauen.

Die selbstfahrende Großballenpresse besitzt noch zu ihrem Antrieb einen Motor 23, der oberhalb des Preßkanals 5 so aufgebaut ist, daß sein hinteres Ende mit dem des Preßkanals 5 vergleicht.

Die Abtriebsseite 24 des Motors 23 zeigt in Fahrtrichtung gesehen nach vorn in Richtung auf die in entgegengesetzter Richtung zeigende Drehachse der Schwungscheibe 25 am Hauptgetriebe 7, wobei deren antriebsmäßige Verbindung untereinander mit einer Längsgelenkwelle 26 hergestellt ist.

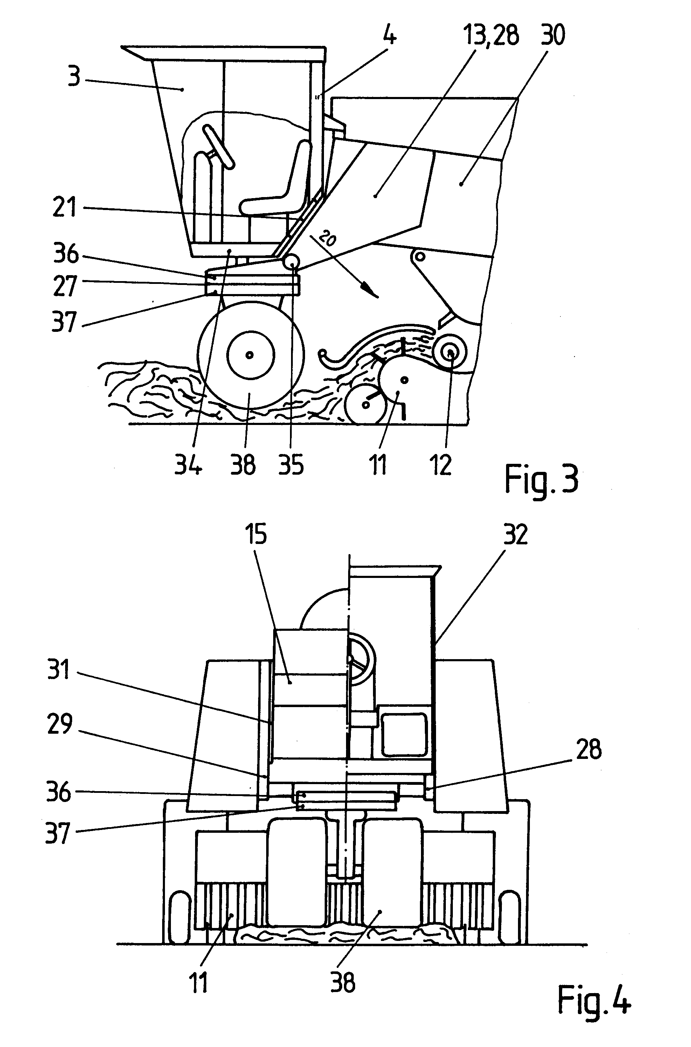

Ein weiteres Ausführungsbeispiel einer selbstfahrenden Großballenpresse mit vorderer Drehschemellenkung 27 und einem anders gestalteten Verbindungsrahmen 13, wie vorstehend beschrieben, zeigen Fig. 3 und 4. Hier wird der Verbindungsrahmen 13 durch einen linken Profilträger 28 und einen rechten Profilträger 29 gebildet, die beide von den sich im Bereich der Seitenwände 30;31 des Preßkanals 5 befindenden Enden des vorderen Querträgers 15 ausgehen. Von da aus führen sie im hinteren unteren Bereich an der Fahrerkabine 3 vorbei, wobei sie annähernd mit deren Seitenwänden 32;33 in einer Ebene liegen und unmittelbar unter dem Boden 34 der Fahrerkabine (3) enden.

Dort sind sie mit einem Querstück 35 untereinander verbunden und das Querstück 35 ist gleichzeitig fester Bestandteil des Oberteils 36 der Drehschemellenkung 27. Das Unterteil 37 der Drehschemellenkung 27 trägt zwei eng beieinanderstehende Breitreifen 38. Ansonsten gleicht dieses Ausführungsbeispiel dem vorstehend beschriebenen nach den Fig. 1 und 2.

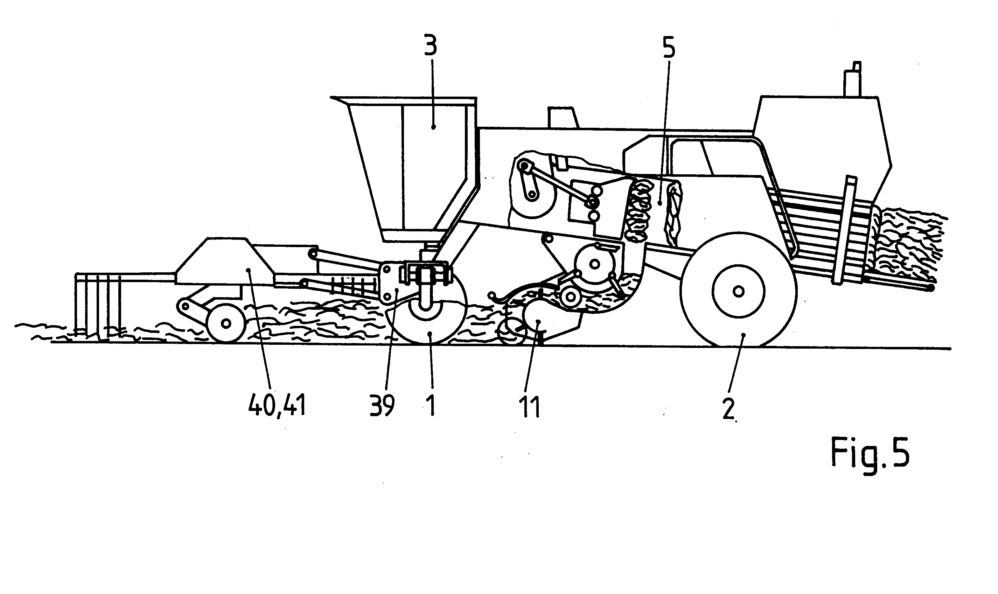

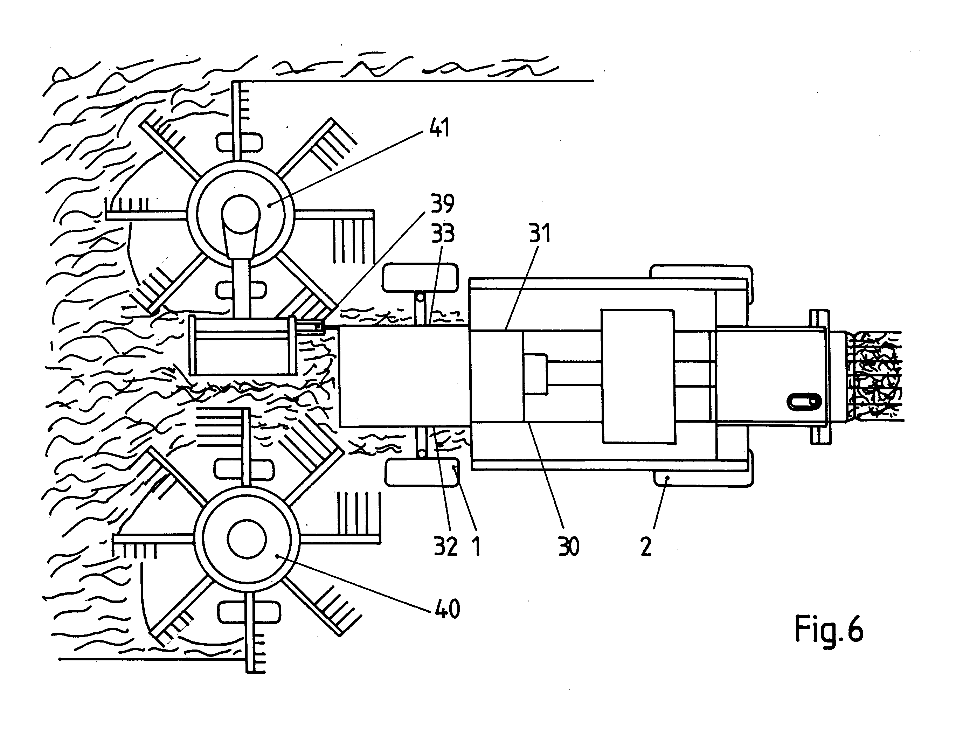

Die Fig. 5 und 6 zeigen noch eine Möglichkeit der Ernte von breit abgelegtem Erntegut bzw. der Zusammenführung mehrerer kleiner Erntegutschwade.

Dazu besitzt die selbstfahrende Großballenpresse an ihrer Vorderseite eine Hubeinrichtung 39, an der ein linker Rotorschwader 40 und ein rechter Rotorschwader 41 und mit relativ großem Durchmesser angehangen ist.

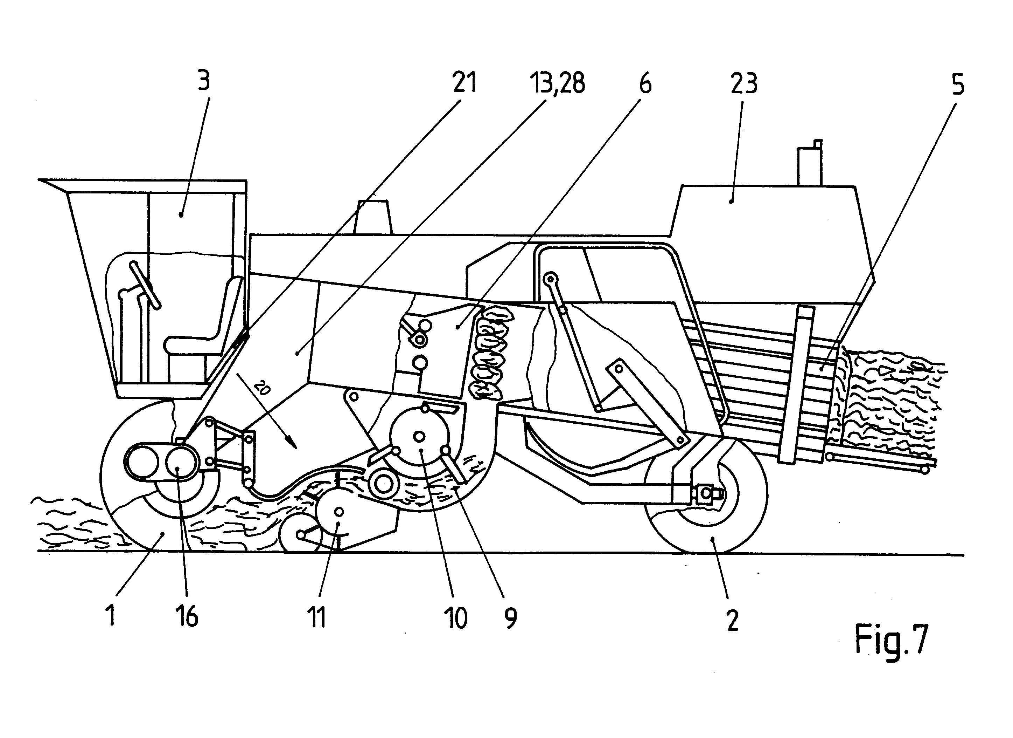

Abschließend zeigt Fig. 7 noch ein weiteres Ausführungsbeispiel einer selbstfahrenden Großballenpresse mit Hinterradlenkung und Vorderradantrieb. Der Verbindungsrahmen 13 wird hier, ebenso wie in den Fig. 3 und 4 gezeigt, durch eine linken Profilträger 28 und einen rechten Profilträger 29 gebildet, im Unterschied dazu reichen deren Enden aber bis zur feststehenden Achse 16 der Vorderräder 1, mit der sie biegesteif verbunden sind.

### Aufstellung der verwendeten Bezugszeichen

1 Vorderräder
2 Hinterräder
3 Fahrerkabine
4 Rückwandteil
5 Preßkanal
6 Preßkolben
7 Hauptgetriebe
8 Kurbeltrieb
9 Zuführkanal
10 Förderorgan
11 Pick up
12 Querförderschnecken
13 Verbindungsrahmen
14 einzelner Profilträger
15 vorderer Querträger
16 Achse
17 Brückenteil
18 Pendelbolzen
19 Vorderachsträger
20 Pfeil
21 durchsichtige Scheiben
22 Fahrersitz
23 Motor
24 Abtriebsseite
25 Schwungscheibe
26 Längsgelenkwelle
27 Drehschemellenkung
28 linker Profilträger
29 rechter Profilträger
30;31 Seitenwand
32;33 Seitenwand
34 Boden
35 Querstück
36 Oberteil
37 Unterteil
38 Breitreifen
39 Hubeinrichtung
40 linker Rotorschwader
41 rechter Rotorschwader

## Patentansprüche

1. Selbstfahrende Großballenpresse zur Herstellung von quaderförmigen Ballen, vorzugsweise zur Ernte landwirtschaftlicher Erntegüter, wie Heu, Stroh oder Welkgut, bestehend aus
einem Fahrgstell, gebildet durch paarweise Vorderräder (1) und Hinterräder (2)
^{*} einem sich oberhalb des Preßkanals (5) befindenden Motors (23)
^{*} einer annähernd über den Vorderrädern (1) angeordneten Fahrerkabine (3)
* einem hinter der Fahrerkabine (3) beginnenden und sich in annähernd horizontaler Richtung nach hinten erstreckenden Preßkanal (5) mit einem darin hin- und herbeweglichen Preßkolben (6), der von einem am vorderen Ende des Preßkanals
(5) angeordneten Hauptgetriebe (7) mittels eines Kurbeltriebes (8) antreibbar ist einem unterhalb des Preßkanals (5) angeordneten nach unten zeigenden und nach vorn gekrümmten Zuführkanal (9) und mit einem mit dem Zuführkanal (9) zusammenwirkenden Förderorgan (10)
^{*} einem vorderen Verbindungsrahmen (13), der vom vorderen Ende des Preßkanals (5) ausgeht und in Richtung der Vorderräder (1) zeigend mit deren Aufhängung verbunden ist, dadurch gekennzeichnet, daß
a) unmittelbar hinter den Vorderrädern (1) eine bodengeführte Pick up (11) angeordnet ist, die annähernd die Breite des Radabstandes der Vorderräder (1) bzw. der Hinterräder (2) besitzt und die wie von gezogenen Großballenpressen her bekannt, mit dem Eingang des Zuführkanals (9) verbunden ist
b) die Fahrerkabine (3) im hinteren unteren Rückwandteil (4), in Blickrichtung des Fahrers auf die Pick up (11), durchsichtig ausgebildet ist
c) sich der Verbindungsrahmen (13) außerhalb der Blickrichtung des Fahrers im hinteren unteren Rückwandteil (4) der Fahrerkabine (3) befindet.

2. Selbstfahrende Großballenpresse nach Anspruch 1, dadurch gekennzeichnet, daß der Verbindungsrahmen (13) als ein einzelner Profilträger (14) ausgebildet ist, der mittig vom vorderen oberen Querträger (15) des Preßkanals (5) ausgeht und mit einem sich mittig zwischen und über der Achse (16) der Vorderräder (1) befindenden Brückenteil (17) biegesteif verbunden ist, wobei das Brückenteil (17) einen etwa horizontal in Fahrtrichtung zeigenden Pendelbolzen (18) gelenkig aufnimmt, der Bestandteil des Vorderachsträgers (19) für die gelenkten Vorderräder (1) ist.

3. Selbstfahrende Großballenpresse nach den Ansprüchen 1 und 2, dadurch gekennzeichnet, daß der Profilträger (14) höchstens die Breite des Fahrersitzes (22) in der Fahrerkabine (3) im Sitz- bzw. Rückenlehnenbereich aufweist.

4. Selbstfahrende Großballenpresse nach Anspruch 1, dadurch gekennzeichnet, daß der Verbindungsrahmen (13) durch einen linken Profilträger (28) und einen rechten Profilträger (29) gebildet wird, wobei beide Profilträger (28;29) von den sich im Bereich der Seitenwände (30;31) des Preßkanals (5) befindenden Enden des vorderen oberen Querträgers (15) des Preßkanals (5) ausgehen, im hinteren unteren Bereich oder außerhalb der Seitenwände (32;33) der Fahrerkabine (3) vorbeiführen und in unmittelbarer Nähe der ungelenkten Vorderräder (1) mit deren Achse (16) biegesteif verbunden sind.

5. Selbstfahrende Großballenpresse nach den Ansprüchen 1 und 4, dadurch gekennzeichnet, daß der Verbindungsrahmen (13) durch einen linken Profilträger (28) und einen rechten Profilträger (29) gebildet wird, wobei beide Profilträger (28;29) von den sich im Bereich der Seitenwände (30;31) des Preßkanals (5) befindenden Enden des vorderen oberen Querträgers (15) des Preßkanals (5) ausgehen, im hinteren unteren Bereich oder außerhalb der Seitenwände (32;33) der Fahrerkabine (3) vorbeiführen und unter dem Boden (34) der Fahrerkabine (3) enden, dort untereinander mit einem Querstück (35) verbunden sind, das Querstück (35) mit dem Oberteil (36) einer Drehschemellenkung (27) eine Einheit bildet und am Unterteil (37) der Drehschemellenkung (27) eng beieinanderstehende Breitreifen (38) angebracht sind.

6. Selbstfahrende Großballenpresse nach den Ansprüchen 1 bis 5, dadurch gekennzeichnet, daß an einer sich vor den Vorderrädern (1) befindenden Hubeinrichtung (39) symmetrisch zur Mitte der selbstfahrenden Großballenpresse ein linker Rotorschwader (40) und ein rechter Rotorschwader (41) mit relativ großem Durchmesser angeordnet sind.

7. Selbstfahrende Großballenpresse nach den Ansprüchen 1 bis 6, dadurch gekennzeichnet, daß oberhalb des Preßkanals (5) ein Motor (23) aufgebaut ist, wobei das hintere Ende des Preßkanals (5) und des Motors (23) etwa vergleichen, die Abtriebsseite (24) des Motors (23) in Fahrtrichtung gesehen nach vorn zeigt und daß sich an die Abtriebsseite (23) eine Längsgelenkwelle (26) anschließt, die mit der in Fahrtrichtung gesehen nach hinten zeigenden Schwungscheibe (25) des Hauptgetriebes (7) antriebsmäßig verbunden ist.
